# EUROPEAN PATENT APPLICATION

(11) **EP 2 945 393 A1**
(43) Date of publication of application: **18.11.2015**
(21) Application number: 15736909.1
(22) Date of filing: 20.01.2015
(51) Int. Cl.: H04N 21/44, H04N 21/436

(54) **REPRODUCTION DEVICE AND DATA REPRODUCTION METHOD**

(30) Priority: 20.01.2014 JP 2014007494
(71) Applicant: Panasonic Intellectual Property Management Co., Ltd., Osaka-shi, Osaka 540-6207 (JP)
(72) Inventor: NAKANISHI, Takahiro, 7F OBP Panasonic Tower 2-1-61 Shiromi, Chuo-ku Osaka 540-6207 (JP)
(74) Representative: Grünecker Patent- und Rechtsanwälte PartG mbB
(86) International application number: PCT/JP2015/000213
(87) International publication number: WO 2015/107909

(57) **Abstract**

A reproducing device is configured to output video data and audio data in a synchronous mode to output the video data and the audio data synchronously with each other, and output at least the video data in the asynchronous mode to output the video data and the audio data asynchronously with each other. The reproducing device reduces unnatural feeling of a user due to a delay of the outputting of the video data and the audio data.

## Description

### TECHNICAL FIELD

The present invention relates to a reproducing device configured to reproduce multimedia data containing encoded video data and encoded audio data.

### BACKGROUND ART

A technique of reproducing multimedia data as follows is known. In the technique, encoded audio data at a silent level is detected and stored in a silent-level data storage unit. When an audio signal delays, encoded audio data at a silent level is stopped supplying to an audio decoder. When an audio signal precedes, silent-level encoded audio data in the silent-level data storage unit is inserted for performing audio and video synchronization. (see, e.g. PTL 1)

The above conventional technique causes a delay when video (image) data and audio (sound) data are output to, e.g. a display device, which may provide a user with unnatural feeling.

### CITATION LIST

### PATENT LITERATURE

PTL 1: Japanese Patent Laid-Open Publication No.10-164556

### SUMMARY

A reproducing device configured to output video data and audio data in a synchronous mode to output the video data and the audio data synchronously with each other and output at least the video data in an asynchronous mode to output the video data and the audio data asynchronously with each other.

The reproducing device reduces unnatural feeling of a user due to a delay of the output video data and the output audio data.

### BRIEF DESCRIPTION OF DRAWINGS

FIG. 1 is a block diagram of a reproducing system including a reproducing device according to Exemplary Embodiment 1.
FIG. 2 is a flowchart showing an operation of the reproducing device according to Embodiment 1.
FIG. 3 is a block diagram of a reproducing system including a reproducing device according to Exemplary Embodiment 2.
FIG. 4 is a flowchart showing an operation of the reproducing device according to Embodiment 2.
FIG. 5 is a block diagram of a reproducing system including a reproducing device according to Exemplary Embodiment 3.
FIG. 6 is a flowchart showing an operation of the reproducing device according to Embodiment 3.

### DETAIL DESCRIPTION OF PREFERRED EMBODIMENTS EXEMPLARY EMBODIMENT 1

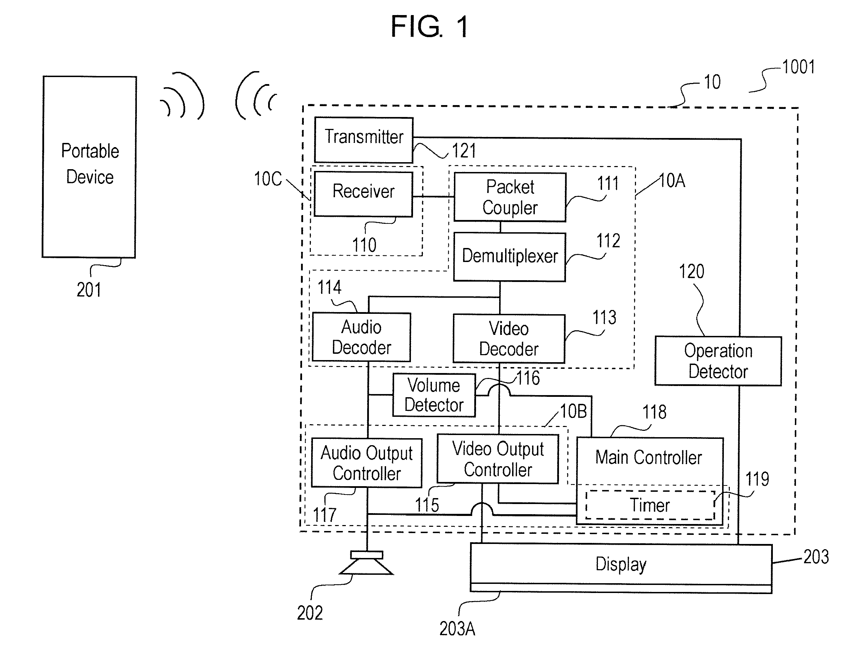

FIG. 1 is a block diagram of reproducing system 1001 according to Exemplary Embodiment 1. Reproducing system 1001 includes in-vehicle device 10 and portable device 201.

As an example, the Miracast™ technology increasingly used in recent years is applied to reproducing system 1001 of this embodiment. Miracast™ is a display transmission technology specified by Wi-Fi Alliance that implements wireless communications from one electronic device to any another. Application examples of Miracast™ include display mirroring from a portable phone to a TV receiver, and real-time screen sharing between a projector in a meeting room and a computer.

The following description provides an example of in-vehicle device 10 of the embodiment where Miracast™ has been applied to an electronic device used in a vehicle (e.g., an automobile) cabin. Miracast™ applied to portable device 201 and in-vehicle device 10 allows video (images) sent from portable device 201 to be displayed on display 203 of in-vehicle device 10.

Portable device 201 is a source device including a signal source that sends video (images). In-vehicle device 10 is a reproducing device often referred to as a sink device that reproduces the video on a display.

In-vehicle device 10 and portable device 201 are configured to be connectable with each other so as to exchange data through wireless or wired communications.

To in-vehicle device 10, loudspeaker 202 that outputs sound to a user and display 203 that outputs video (images) are connected.

Portable device 201 will be described first. Portable device 201 according to Embodiment 1 is a so-called smart phone; however, it may be any source device other than a smart phone as long as it transmits video data and audio data standardized in accordance with the Motion Picture Experts Group Transport Stream (MPEG2-TS) standard, to in-vehicle device 10.

Data transmitted from portable device 201 contains data of a reproduction time, which allows in-vehicle device 10 to reproduce video (images) and sound synchronously with each other.

In-vehicle device 10 includes receiver 110 that receives data sent from portable device 201. Receiver 110 which may be implemented by a typical Wi-Fi receiver may decrypt encrypted packets and remove a packet header of the physical layer, for example.

Data received and processed by receiver 110 is input to packet coupler 111. The received data has been divided to have an appropriate size to form packets. Packet coupler 111 couples the divided packets to each other.

Data coupled by packet coupler 111 is supplied to demultiplexer 112 at the next stage. Demultiplexer 112 generates a video elementary stream (ES) (i.e., encoded video data) and an audio elementary stream (ES) (i.e., encoded audio data), based on the data that is supplied from packet coupler 111.

The video ES and the audio ES generated by demultiplexer 112 are output to video decoder 113 and audio decoder 114, respectively.

Video decoder 113 accumulates the video data (i.e., the video ES) generated by demultiplexer 112 and decodes the accumulated video data. Similarly, audio decoder 114 accumulates the audio data (i.e., the audio ES) generated and decodes the accumulated audio data.

The video data decoded by video decoder 113 is input to video output controller 115. Video output controller 115 controls timing at which the video is displayed on display 203 (i.e., timing at which the video data is output to display 203) mainly according to a time stamp (time point data) added to the video data that has been input and/or to information from volume detector 116, described later.

Video output controller 115 may be configured to perform some video processing on the data received from video decoder 113 for example, or to perform a process that adjusts the data to the function, performance, or display mode of display 203 as the output destination.

The audio data decoded by audio decoder 114 is input to audio output controller 117. Audio output controller 117 controls timing at which sound is output to loudspeaker 202 mainly according to a time stamp (time point data) added to the audio data that has been input.

Then, volume detector 116 detects a state indicated by the audio data decoded by audio decoder 114. The state may include a volume level of the audio data.

In this case, volume detector 116 detects the volume level of the decoded audio data. For example, volume detector 116 detects whether or not the detected volume level is higher than a predetermined threshold. If the detected volume level is not higher than the threshold, volume detector 116 outputs a silence detection signal (indicating a low volume level) to video output controller 115. In this case, volume detector 116 may preferably output a silence detection signal to video output controller 115 to avoid jitter if the volume level continues to be lower than the threshold for a period of time not shorter than a predetermined period.

Video output controller 115 and audio output controller 117 may be configured to receive time point data from timer 119 included in main controller 118.

Here, time point data may either indicate a present time or a time elapsing from a predetermined time point.

The predetermined time point may be a time point at which timer 119 (main controller 118) has received a signal from each controller if two-directional data communications is possible with video output controller 115 or audio output controller 117. In this embodiment, this configuration allows each controller to request the elapsed time from timer 119 (main controller 118).

In-vehicle device 10 according to Embodiment 1 includes touch panel 203A as a component that accepts an operation by a user. Touch panel 203A is provided on a surface of display 203 facing the user. Operation detector 120 shown in FIG. 1 detects a position where a user has touched on touch panel 203A.

Data (operational data) indicating the position detected by operation detector 120 is transmitted to portable device 201 via transmitter 121. Transmitter 121 which may be implemented by a typical Wi-Fi transceiver encrypts packets, and adds a packet header of the physical layer, for example. Portable device 201 that has received the operational data regards the information as that when portable device 201 has been directly operated.

For example, if operation detector 120 detects that the user has touched a position on display 203 where display 203 displays a button image, portable device 201 that has received the data performs its process assuming that the related button has been touched; updates the screen content; converts the new screen content to the MPEG2-TS motion-picture format; and transmits it to in-vehicle device 10 by wireless communications.

As described above, loudspeaker 202 that outputs (emits) sounds to the user and display 203 that outputs video (images) to the user are connected to in-vehicle device 10.

In the above-described configuration, a typical microprocessor and software programs are used to implement packet coupler 111, demultiplexer 112, video decoder 113, audio decoder 114, volume detector 116, video output controller 115, audio output controller 117, main controller 118, timer 119, and operation detector 120.

In this case, they may be implemented by a basic configuration including a CPU, ROM, and RAM for example, by the CPU executing software programs stored in the ROM while using the RAM for a working area.

Above-described each unit can be implemented by one microprocessor; however, multiple functions (the functions of the units) can be implemented by a single microprocessor. Instead, the functions of the units can be implemented by an appropriate combination of CPUs, ROMs, and RAMs. Hence, in the description using FIG. 1, main controller 118 is described as a centralized controller for convenience; however, whether or not timer 119 is contained in main controller 118 depends on the suitability of a target product. There is no limitation on the form.

In the above-described configuration, packet coupler 111, demultiplexer 112, audio decoder 114, and video decoder 113 constitute decoding unit 10A. Audio output controller 117, video output controller 115, and timer 119 constitute output unit 10B. Receiver 110 constitutes receiving unit 10C.

An operation of reproducing system 1001 will be described below.

Reproducing system 1001 including in-vehicle device 10 (reproducing device) according to Embodiment 1 uses the Miracast™ technology. Miracast™ displays screen content of portable device 201 (a source device) on display 203 connected to in-vehicle device 10 via wireless (Wi-Fi). Further, sound from portable device 201 (source device) is wirelessly transmitted and is output from loudspeaker 202 connected to in-vehicle device 10.

In this case, it is preferable that the following three conditions: maintaining video and sound quality (free of interruption), synchronizing video and sound (lip-sync), and reducing delay (delay before data output due to data processing) are satisfied. However, two of the three conditions may be satisfied to deteriorate the remaining one for the following reason.

Generally, audio data can be regarded as continuous data from its characteristic viewpoint. Hence, if data received from a network delays to cause audio data to be absent even momentarily, a user senses sound interruption, which immediately leads to user's dissatisfaction. Thus, the audio data is buffered to eliminate the sound interruption.

Meanwhile, video data can be handled as discontinuous data unlike audio data. Hence, even if data received from a network delays, screen content is simply updated with some delay. A small degree of delay prevents a user from perceiving it.

To synchronize audio data and video data having such properties with each other, output of video data needs to be delayed in accordance with a delay due to buffering of audio data.

With audio data buffered and without video data buffered, the quality of video and sound is maintained and low delay is achieved, which on the other hand degrades synchronization of video and sound. Without audio and video data buffered, video and sound are synchronized and a small delay is achieved, which degrades the quality of video and sound.

However, a user may or may not notice a delay depending on usage conditions. For example, while a user reproduces motion pictures (i.e., a user does not intentionally operate the device), they mind lip-sync but does not delay. Meanwhile, when a user operates the device from an indicated menu, the user notices delay but does not lip-sync.

In view of the circumstances, this embodiment does not synchronize video and audio especially if a silent state (or data representing silence) is detected in audio data decoded by in-vehicle device 10. Thus, video is output earlier than a case where synchronization is performed.

It is assumed that the above conventional technology synchronizes video (image) data and audio (sound) data, and thus a delay occurs when data is output to a display device for example.

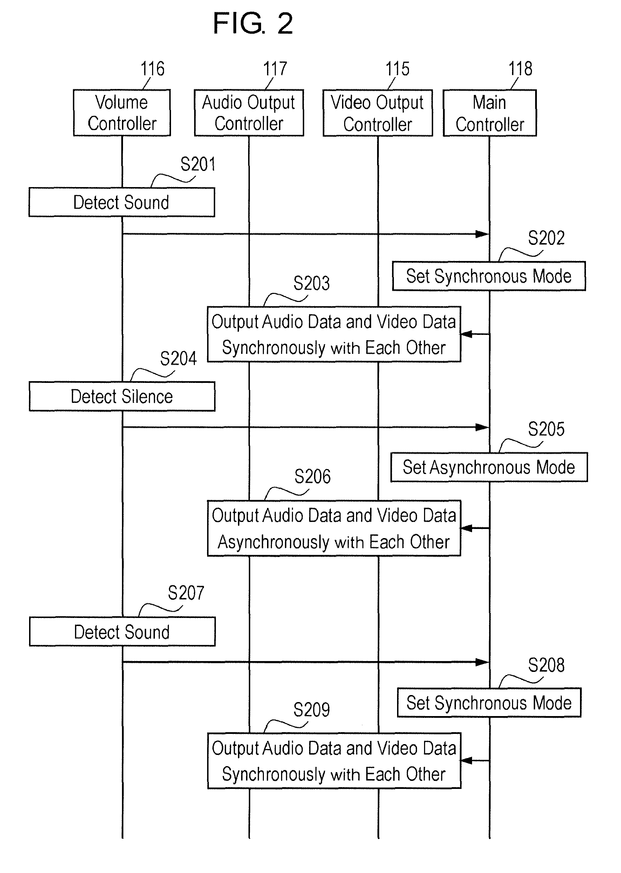

An operation of in-vehicle device 10 will be described below. FIG. 2 is a flowchart of the operation of in-vehicle device 10 according to Embodiment 1.

In-vehicle device 10 receives encoded video data and encoded audio data from portable device 201. Video decoder 113 (see FIG. 1) decodes the encoded video data. Main controller 118 controls timing of displaying the video data through video output controller 115. Audio decoder 114 decodes accumulated audio data (an audio ES), and volume detector 116 detects a volume level of the decoded audio data in each frame of the audio data.

If the detected volume level is higher than a predetermined threshold or not lower than the predetermined threshold, which is regarded as being not silent (sound is present), volume detector 116 outputs a sound detection signal to main controller 118 (step S201).

Upon receiving the sound detection signal from volume detector 116, main controller 118 sets (switches) an operation mode of the device to the synchronous mode to output audio data and video data synchronously with each other (step S202).

When the operation mode is set to the synchronous mode, main controller 118 outputs the audio data and the video data synchronously with each other through audio output controller 117 and video output controller 115 (step S203).

While in-vehicle device 10 operates in the synchronous mode, lip-sync is maintained. Main controller 118 allows audio output controller 117 to buffer the audio data. While main controller 118 allows audio output controller 117 to buffer the audio data, main controller 118 allows video output controller 115 to temporarily stop and store video data. Main controller 118 performs this operation by using time stamps added to the audio data and the video data.

If the detected volume level is lower than the predetermined threshold or not higher than the predetermined threshold, which is regarded as being silent, volume detector 116 outputs a silence detection signal to main controller 118 (step S204).

Upon receiving the silence detection signal from volume detector 116, main controller 118 sets (switches) the operation mode of the device to the small-delay mode (step S205).

Here, the small-delay mode refers to a mode in which audio data and video data are output asynchronously with each other.

Upon being set to the small-delay mode, main controller 118 controls audio output controller 117 and video output controller 115 to output the audio data and the video data asynchronously with each other (step S206). In step S206, main controller 118 controls audio output controller 117 and video output controller 115 to output only the video data while causing the audio data and the video data to be asynchronous with each other and the audio data may not necessarily be output. In other words, in step S206, main controller 118 controls audio output controller 117 and video controller 115 to output at least the video data while causing the audio data and the video data to be asynchronous with each other.

In the small-delay mode, main controller 118, audio output controller 117, and video output controller 115 do not control so as positively not to synchronize the video data and the audio data. Instead, the controllers do not perform audio-data buffering or video-delay processing (temporary stopping and storing of the video data) for synchronization, unlike in the above synchronous mode. Consequently, the video data and the audio data can resultantly be synchronous even in the small-delay mode.

That is, in the small-delay mode, main controller 118 may or may not cause audio output controller 117 to buffer the audio data. Further, video output controller 115 successively outputs the video data at the time point when video data can be displayed on display 203 regardless of buffering of the audio data or time point information indicated by the time stamp.

In the synchronous mode, video output controller 115 buffers the video data in accordance with the buffering of audio data.

When the operation mode shifts from the synchronous mode to the small-delay mode, main controller 118 may clear this buffered video data at once except for the latest video data. Alternatively, main controller 118 may shorten the interval of updating images to gradually remove the buffered video data. The former manner allows motion pictures to be reproduced while being skipped forward. The latter manner allows motion pictures to be fast-forwarded for a certain time. The interval of updating the images is preferably determined to be short enough to prevent the user from having an unnatural feeling.

Volume detector 116 operates to successively detect the volume level of the audio data decoded by audio decoder 114. When detecting the volume level of audio data detected during the operation in the small-delay mode as sound being present (step S207), volume detector 116 outputs a sound detection signal to main controller 118 similarly to step S201 to switch the operation mode of in-vehicle device 10 to the synchronous mode (step S208).

After switched to the synchronous mode in step S208, main controller 118, similarly to step S203, outputs sound and video synchronously with each other through audio output controller 117 and video output controller 115 (step S209).

A main operation in the synchronous mode is that, when motion pictures (e.g., a movie, music video) are viewed. Such operation is meaningful when video and sound are synchronized. Even if the video generated by portable device 201 delays when the video is displayed on in-vehicle device 10, synchronization of the video and the sound provides a user with little unnatural feeling.

In this case, the user usually does not operate in-vehicle device 10, and thus notices lip-sync rather than the speed of reaction to operation. Hence, in-vehicle device 10 operates in the synchronous mode (sound and video are synchronized) more usefully than in the small-delay mode.

Volume detector 116 detects a volume level of decoded audio data. If the detected volume level indicates a silent state, output unit 10B may output at least the decoded video data in the asynchronous mode. If the detected volume level does not indicate a silent state, output unit 10B may output the decoded video data and the decoded audio data in the synchronous mode.

As described above, according to this embodiment the in-vehicle device is switched between the synchronous mode (video data and audio data are synchronized) and the small-delay (asynchronous) mode in response to the volume level (whether sound is present or not) of the decoded audio data. When the audio data is output, the mode is changed to output the video and the sound synchronously with each other, thereby allowing in-vehicle device (reproducing device) 10 to show a user motion pictures without unnatural feeling.

In the synchronous mode, the audio data and the video data are buffered for reproducing, which prevents sound interruption resulting from the reception and processing delay of the audio data, thereby reproducing quality motion pictures for users.

In the above-described description, main controller 118 controls audio output controller 117 and video output controller 115 to synchronize the video data and the audio data. Main controller 118 may perform the operation by the following configuration.

That is, time point information is exchanged between timer 119 and each of audio decoder 114 and video output controller 115. Further, the sound detection signal and the silence detection signal output from volume detector 116 are input to video output controller 115.

In this configuration, time point information (e.g., a time stamp) obtained by audio decoder 114 is successively sent to timer 119. Video output controller 115 monitors the difference between the latest time point and the next previous time point associated with the audio data. This operation allows video output controller 115 to detect a part of the audio data which is decoded.

This operation allows video output controller 115 to output the video data in response to circumstances of decoding audio data, i.e., synchronously with the audio data.

### EXEMPLARY EMBODIMENT 2

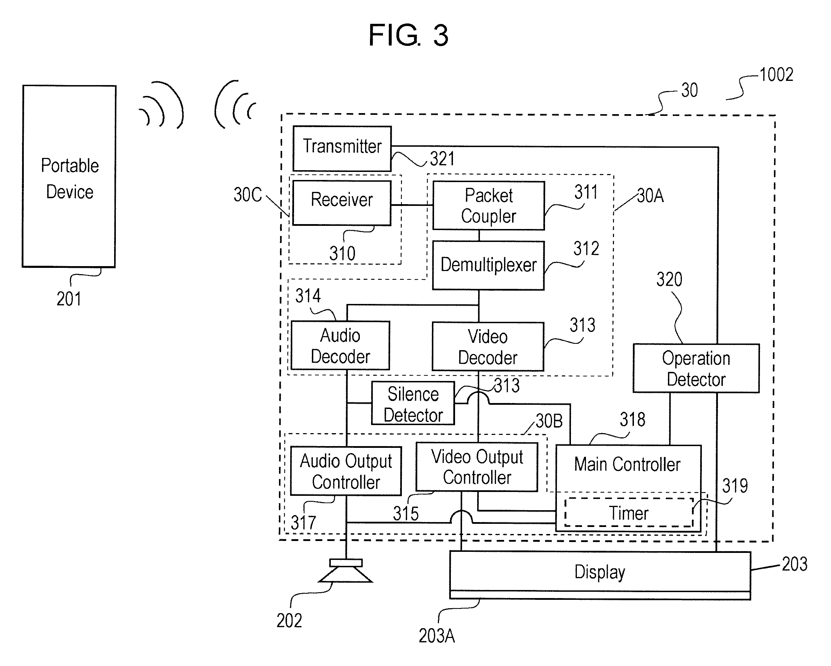

FIG. 3 is a block diagram of reproducing system 1002 according to Exemplary Embodiment 2. In FIG. 3, components identical to those of reproducing system 1001 according to Embodiment 1 shown in FIG. 1 are denoted by the same reference numerals. Reproducing system 1002 includes in-vehicle device 30 and portable device 201.

Reproducing system 1002 according to this embodiment uses the Miracast™ technology similarly to reproducing system 1001 according to Embodiment 1. The technology allows video (images) on portable device 201 to be displayed on a display of in-vehicle device 10 as a reproducing device.

In Miracast™, touch panel 203A is further used for a user to operate in-vehicle device 30 as the reproducing device. The user touches touch panel 203A provided on the display of the reproducing device (30) to operate portable device 201 (user input back channel (UIBC) function).

In this case, a feeling of in-vehicle device 30 operating portable device 201 is required, especially a small delay of the video output if required.

In-vehicle device 30 as the reproducing device is configured to be connected with portable device 201 so as to exchange data with portable device 201 through wireless or wired communications.

Loudspeaker 202 that outputs sound toward a user and display 203 that outputs video (images) are connected to in-vehicle device 30,.

In-vehicle device 30 includes receiver 310 that receives data sent from portable device 201. Receiver 310 (e.g., a typical Wi-Fi receiver) decrypts encrypted packets, and removes a packet header of the physical layer, for example.

Data received and processed by receiver 310 is input to packet coupler 311. The received data is divided into packets each having an appropriate size. Packet coupler 311 combines these packets.

Data coupled by packet coupler 311 is sent to next-stage demultiplexer 312. Demultiplexer 312 generates a video elementary stream (ES) (i.e., encoded video data) and an audio elementary stream (ES) (i.e., encoded audio data) based on data sent from packet coupler 111.

The video ES generated by demultiplexer 312 is output to next-stage video decoder 313. The audio ES is output to audio decoder 314.

Video decoder 313 accumulates the video data (i.e., the video ES) generated by demultiplexer 312 and decodes the accumulated video data. Similarly, audio decoder 314 accumulates the audio data (i.e., an audio ES) generated and decodes the accumulated audio data.

The video data decoded by video decoder 313 is input to video output controller 315. Video output controller 315 controls timing at which video is displayed on display 203 (i.e., timing at which video data is output to display 203) mainly according to a time stamp (time point information) added to the input video data.

Video output controller 315 may be configured to perform a video processing onto the data received from video decoder 313, or to perform a process that adjusts the data to the function, performance, or display mode of display 203 as an output destination.

The audio data decoded by audio decoder 314 is input to audio output controller 317. Audio output controller 317 controls timing at which sound is output to loudspeaker 202 (described later) mainly according to a time stamp (time point information) added to the input audio data.

Video output controller 315 and audio output controller 317 are configured to receive time point information from timer 319 in main controller 318.

Here, the time point information may indicate the present time or indicate elapsed time from a specific time point.

The specific time point may be that at which timer 319 (main controller 318) receives a signal from each controller if two-directional information communications is possible with video output controller 315 or audio output controller 317. According to this embodiment, each controller requests elapsed time from timer 319 (main controller 318).

In-vehicle device 30 includes touch panel 203A as a device that accepts an operation by a user. Touch panel 203A is provided on display 203 and has a surface facing a user. Operation detector 320 shown in FIG. 3 detects a position which the user touches on touch panel 203A.

Information (operational information) indicating the position detected by operation detector 320 is supplied to portable device 201 through transmitter 321. Transmitter 321 (e.g., a typical Wi-Fi transceiver) encrypts packets, and adds a packet header of the physical layer, for example.

As shown in FIG. 3, according to this embodiment, operation detector 320 detects whether or not the user performs operation, and supplies the information (a detection result) to main controller 318. If the user does not perform any operation, operation detector 320 supplies, to main controller 318, information (a no-operation detection signal) indicating no operation is performed. If the user performs an operation (touch panel 203A is touched, or it is detected that touch panel 203A is touched), operation detector 320 supplies, to main controller 318, information (an operation detection signal) indicating that the operation is performed.

Alternatively, main controller 318 may determine that the user does not perform an operation if main controller 318 does not detect a signal from operation detector 320 for a predetermined time. In this case, operation detector 320 does not necessarily output a no-operation detection signal.

As described above, loudspeaker 202 that outputs (discharges) sound to the user and display 203 that outputs video (images) to the user are connected to in-vehicle device 30.

In the above configuration, a typical microprocessor and software programs are used to implement packet coupler 311, demultiplexer 312, video decoder 313, audio decoder 314, video output controller 315, audio output controller 317, main controller 318, timer 319, and operation detector 320.

In this case, the controllers and detectors are implemented, in a basic configuration including a CPU, ROM, and RAM for example, by the CPU executing software programs stored in the ROM while using the RAM for a working area.

The above controllers and detectors can be implemented by one microprocessor; however, multiple functions (the functions of the controllers and detectors) can be implemented by a single microprocessor. Instead, the functions of the controllers and detectors can be implemented by an appropriate combination of CPUs, ROMs, and RAMs.

Hence, in the description referring to FIG. 3, main controller 318 is described as a controller performing a whole control; however, whether or not timer 319 is contained in main controller 318 depends on the suitability of a target product. There is no limitation on the form.

Packet coupler 311, demultiplexer 312, audio decoder 314, and video decoder 313 constitute decoding unit 30A. Audio output controller 317, video output controller 315, and timer 319 constitute output unit 30B. Receiver 310 constitutes receiving unit 30C.

An operation of reproducing system 1002 will be described below. In-vehicle device 30 (i.e., a reproducing system according to this embodiment) using the Miracast™ technology may send information on operation at a sink (in-vehicle device 30) by a user to a source (portable device 201) according to this embodiment.

In this case, the user does not notice lip-sync, but especially notices the following phenomenon occurring in operation through touch panel 203A. That is, when the user performs an operation on a menu or icon displayed on display 203 and when the user scroll, updating the screen content delays.

In-vehicle device 30 according to this embodiment does not perform synchronization of video and sound when an operation instruction from a user is detected, thereby outputting video earlier than a case where synchronization is performed.

Thus, the screen content reacts to an operation instruction (e.g., followability to scrolling) without delay, thereby allowing the user to operate the device smoothly without unnatural feeling.

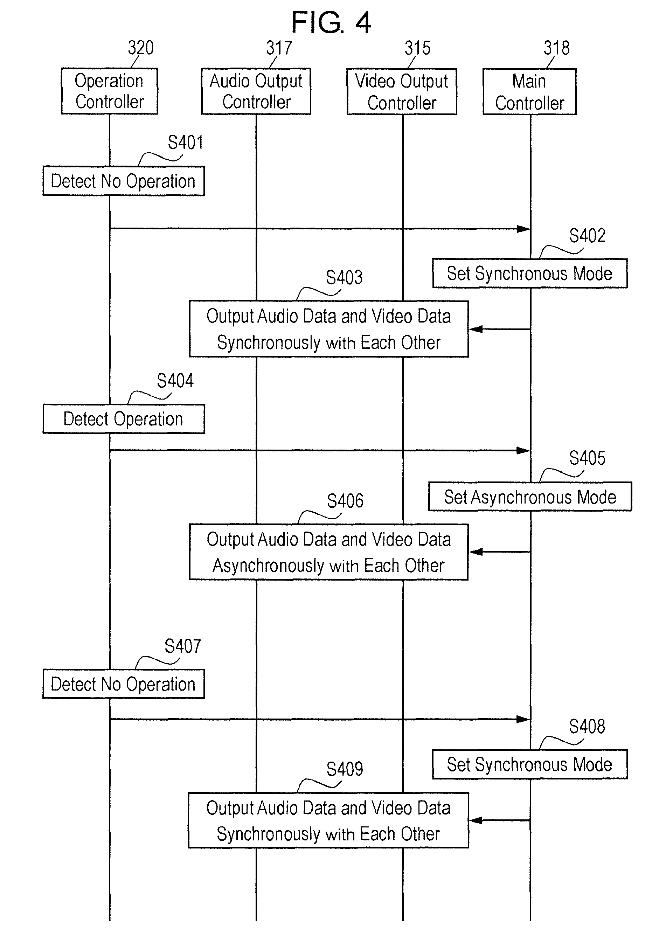

The operation of in-vehicle device 30 will be detailed below. FIG. 4 is a flowchart showing the operation of in-vehicle device 30 according to Embodiment 2.

In FIG. 4, if an operation instruction from a user is not detected (e.g., a case where the user is viewing motion pictures), a no-operation detection signal indicating that a user does not operate the device is supplied from operation detector 320 to main controller 318 (step S401).

Upon receiving the no-operation detection signal from operation detector 320, main controller 318 sets (switches) the operation mode of the device to the synchronous mode to synchronize audio data and video data with each other (step S402).

Upon setting to the synchronous mode, main controller 318 allows audio output controller 317 and video output controller 315 to output sound and video synchronously with each other (step S403).

When operating in the synchronous mode, In-vehicle device 30 operates similarly to in-vehicle device 10 according to Embodiment 1 operating in the synchronous mode.

Regardless of whether or not motion pictures are reproduced, when the user operates in-vehicle device 30 (using touch panel 203A in this case), operation detector 320 outputs, to main controller 318, an operation detection signal indicating that the user performs an operation (step S404).

Upon receiving the operation detection signal from operation detector 320, main controller 318 sets (switches) the operation mode of the device to the small-delay mode to output audio data and video data asynchronously with each other (step S405).

When being set to the small-delay mode, main controller 318 controls audio output controller 317 and video output controller 315 to output sound and video asynchronously with each other (step S406).

In the small-delay mode, main controller 318, audio output controller 317, and video output controller 315 do not control so as positively not to synchronize video data and audio data. Instead, the controllers do not perform audio-data buffering or video-delay processing (temporary stopping and storing of video data) for synchronization as in the synchronous mode. Consequently, video data and audio data can resultantly be synchronous even in the small-delay mode.

That is, in the small-delay mode, main controller 318 may (or does not need to) allow audio output controller 317 to buffer audio data. Further, video output controller 315 successively outputs video data at the time when video data can be displayed on display 203, regardless of buffering of audio data or time point information indicated by a time stamp.

However, audio data once buffered for a predetermined time, the buffering often continues unless the buffer is cleared. This is because new audio data is received at a speed identical to that at which audio data is usually consumed in streaming reproduction.

Video data is also buffered. The buffered video data may be cleared except for the latest video data. Instead, shortening intervals for updating images allows buffering to be gradually eliminated. The former manner allows motion pictures to be reproduced momentarily skipped forward. The latter manner allows the motion pictures to be fast-forwarded for a certain time. The interval of updating images is preferably short enough to prevent the user from having unnatural feeling.

A main operation in the small-delay mode includes a case where the user operates in-vehicle device 30. For example, if the user operates in-vehicle device 30 through touch panel 203A, an image, such as an icon, appears on display 203. By the Miracast™ technology, such an image of an icon is also transmitted from portable device 201.

In this case, while the user operates the device, the user often notices the speed of reaction to the operation rather than lip-sync. Hence, in-vehicle device 30 is operated in the small-delay mode (delay is not generated) more usefully than in the synchronous mode.

Further, operation detector 320 successively operates so as to detect whether or not the user performs an operation. If detecting no-operation during operation in the small-delay mode (step S407), operation detector 320 outputs a no-operation detection signal to main controller 318 similarly to step S401 to change the operation mode of in-vehicle device 30 to the synchronous mode (step S408).

After switched to the synchronous mode in step S408, main controller 318, similarly to step S403, outputs audio data and video data synchronously with each other from audio output controller 317 and video output controller 315 (step S409).

As described above, according to this embodiment, the device switches between synchronizing and not synchronizing video data and audio data, in response to whether or not the user performs an operation, thereby reducing unnatural feeling of a user due to a delay of displaying the video data.

Audio data is always buffered for reproducing, which prevents sound interruption resulting from reception and processing delay of audio data, thereby reproducing quality motion pictures for the user.

As described above, operation detector 320 detects whether or not the user operates reproducing device 30. When operation detector 320 detects that the user performs an operation, output unit 30B outputs the decoded video data and the decoded audio data in the asynchronous mode. Further, if operation detector 320 does not detect that the user performs an operation, output unit 30B may output the decoded video data and the decoded audio data in the synchronous mode.

In the above-described description, main controller 318 controls audio output controller 317 and video output controller 315 to synchronize video data and audio data; however, the operation may be performed with the following configuration.

That is, time point information can be exchanged between timer 319 and each of audio decoder 314 and video output controller 315.

In this configuration, time point information (e.g., a time stamp) obtained by audio decoder 314 is successively sent to timer 319. Video output controller 315 monitors the difference between the latest time point information and the next previous time point of those associated with audio data. This operation allows video output controller 315 to detect a part of the audio data which is decoded. This allows video output controller 315 to output the video data synchronously with sound in response to a status of decoding audio data.

### EXEMPLARY EMBODIMENT 3

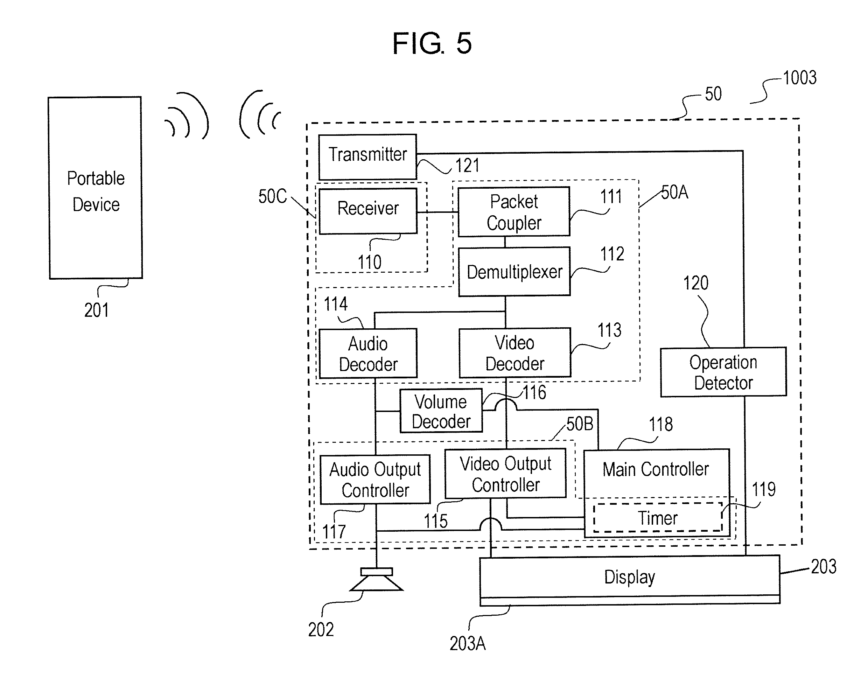

FIG. 5 is a block diagram of reproducing system 1003 according to Exemplary Embodiment 3. In FIG. 5, components identical to those of reproducing systems 1001 and 1002 according to Embodiments 1 and 2 shown in FIGs. 1 and 3 are denoted by the same reference numerals. Reproducing system 1003 includes in-vehicle device 50 as a reproducing device, instead of in-vehicle devices 10 and 30 that are reproducing devices of reproducing systems 1001 and 1002 according to Embodiments 1 and 2 shown in FIGs. 1 and 3.

In in-vehicle device 50 according to Embodiment 3, two types of setting (switching) methods are combined: one is switching between the synchronous mode and the small-delay mode according to the volume level of audio data in in-vehicle device 10 according to Embodiment 1. The other is switching between the synchronous mode and the small-delay mode according to whether or not a user operates in-vehicle device 10 according to Embodiment 2. In this case, video data and audio data are output in the small-delay mode in at least one of the two cases where the volume level of audio data indicates a silent state and where the user performs an operation.

Video data and audio data are output in the synchronous mode in the two cases where the volume level of audio data indicates non-silent state and where the user does not perform any operation.

In the above-described configuration, packet coupler 111, demultiplexer 112, audio decoder 114, and video decoder 113 constitute decoder 50A. Audio output controller 117, video output controller 115, and timer 119 constitute output unit 50B. Receiver 110 constitutes receiving unit 50C.

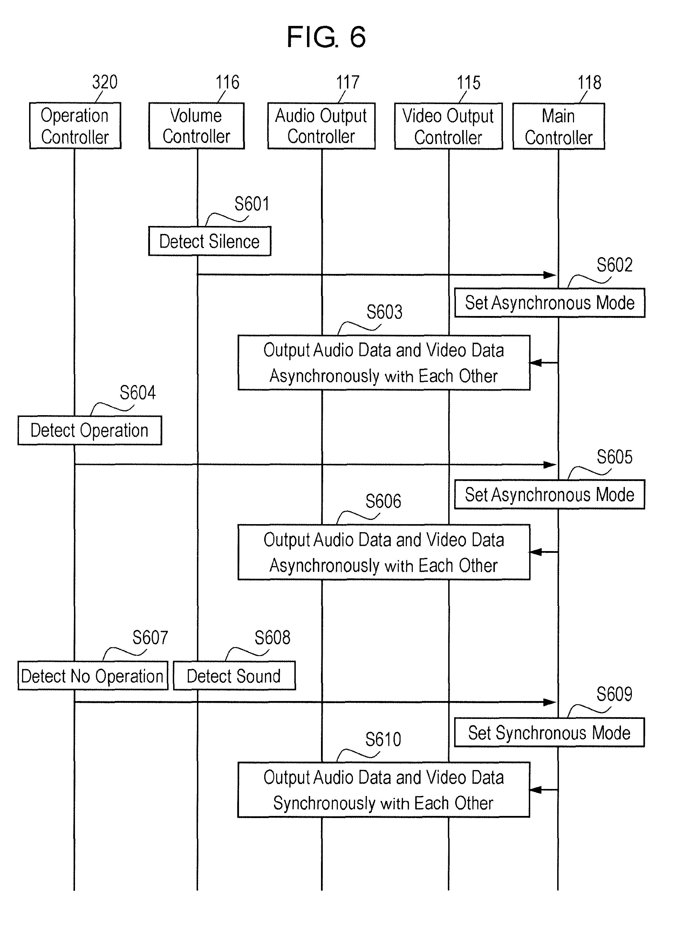

An operation of in-vehicle device 50 will be described below. FIG. 6 is a flowchart showing the operation of in-vehicle device 50. Volume detector 116 detects the volume level of the decoded audio data. Operation detector 320 detects whether or not the user operates in-vehicle device 50.

If the detected volume level indicates a silent state (step S601), output unit 50B is set to the small-delay mode regardless of results of detection by operation detector 320 (step S602), and outputs at least the decoded video data. According to Embodiment 3, the decoded audio data and the decoded video data are output (step S603).

If operation detector 320 detects that the user performs an operation (step S604), output unit 50B is set (switched) to the small-delay mode regardless of the volume level detected by volume detector 116 (step S605), and outputs the decoded video data and the decoded audio data in the small-delay mode (step S606).

If the volume level detected by volume detector 116 indicates not a silent state, that there is sound (step S608) and operation detector 320 does not detect that the user performs an operation (i.e., detects that the user does not perform any operation) (step S607), output unit 50B is set (switched) to the synchronous mode (step S609) and outputs the decoded video data and the decoded audio data (step S610).

In-vehicle devices 10, 30, and 50 as reproducing devices according to the embodiments include touch panel 203A as an input device operated by a user, to which any input device can be applied such as a button, keyboard, and variable resistor.

As described above, in-vehicle devices 10, 30, and 50 as reproducing devices according to Embodiments 1 to 3 are configured to be switched between synchronous and asynchronous (small delay) of video (images) data and audio data, which reduces unnatural feeling of a user related to video and sound.

The reproducing devices according to Embodiments 1 to 3 may be used not for the Miracast™ technology, but for motion picture streaming using Virtual Network Client and Real-time Transport Protocol (RTP), and its application target is not limited to an in-vehicle device. For reproducing devices according to Embodiments 1 to 3, its communication system between a source device and a reproducing device is assumed to be Wi-Fi, but not limited to it. The invention is also applicable to a case where video (image) data and audio data are received through different communication system. The format for motion picture streaming is MPEG2-TS, but any other format can be used.

The devices according the embodiments, however, allows a user to operate an icon displayed on an in-vehicle device (reproducing device) as a sink to control portable device 201 as a source without delay, and thus is useful especially when applied to a technology such as Miracast™.

### INDUSTRIAL APPLICABILITY

A reproducing device according to the present invention reduces unnatural feeling of a user regarding synchronization and delay of video (images) and sound, and is useful as a reproducing device for multimedia data including encoded video data and encoded audio data.

### REFERENCE MARKS IN THE DRAWINGS

10, 30 in-vehicle device (reproducing device)
10A, 30A decoding unit
10B, 30B output unit
112, 312 demultiplexer
113, 313 video decoder
114, 314 audio decoder
115, 315 video output controller
116 volume detector
117, 317 audio output controller
118, 318 main controller
119, 319 timer
120, 320 operation detector
121, 321 transmitter
201 portable device
202 loudspeaker
203 display

## Claims

1. A reproducing device configured to decode encoded video data and encoded audio data and to output the decoded video data and the decoded audio data, the reproducing device comprising:
a decoding unit that configured to decode the encoded video data and the encoded audio data; and
an output unit that outputs at least one of the video data and the audio data decoded by the decoding unit while controlling a timing of the outputting of the at least one of the decoded video data and the decoded audio data,
wherein the output unit is configured to output the decoded video data and the decoded audio data while switching between a synchronous mode to output the decoded video data and the decoded audio data synchronously with each other and a small-delay mode to output the decoded video data and the decoded audio data asynchronously with each other.

2. The reproducing device of claim 1, further comprising
a volume detector that detects a volume level of the audio data decoded by the decoding unit,
wherein the output unit outputs the decoded video data and the decoded audio data in the small-delay mode if the volume level detected by the volume detector indicates a silent state.

3. The reproducing device of claim 1, further comprising
an operation detector configured to detect whether or not a user operate the reproducing device,
wherein the output unit outputs the decoded video data and the decoded audio data in the small-delay mode if the operation detector detects that a user operates the reproducing device.

4. A reproducing device configured to decode encoded video data and encoded audio data and output the decoded video data and the decoded audio data, the reproducing device comprising:
a receiver configured to receive the encoded video data and the encoded audio data from a portable terminal connected to the reproducing device;
a decoding unit configure to decode the encoded video data and the encoded audio data;
an output unit configure to output at least one of the video data and the audio data decoded by the decoding unit while controlling a timing of the outputting of the decoded video data and the decoded audio data; and
a volume detector configured to detect a volume level of the audio data decoded by the decoding unit,
wherein the output unit configured to:
output the decoded video data and the decoded audio data in a small-delay mode to output the decoded video data and the decoded audio data asynchronously with each other if the volume detected by the volume detector indicates a silent state; and
output the decoded video data and the decoded audio data in a synchronous mode to output the decoded video data and the decoded audio data synchronously with each other if the volume detected by the volume detector indicates a non-silent state.

5. A reproducing device configured to decode encoded video data and encoded audio data and output the decoded video data and the decoded audio data, the reproducing device comprising:
a decoding unit configure to decode the encoded video data and the encoded audio data;
an output unit configure to output at least one of the video data and the audio data decoded by the decoding unit while controlling a timing of outputting of the at least one of the decoded video data and the decoded audio data; and
an operation detector that detects whether or not a user has performed operation on the video data output from the output unit,
wherein the output unit is configured to output the decoded video data and the decoded audio data in a small-delay mode to output the decoded video data and the decoded audio data asynchronously with each other if the operation detector detects that a user performs an operation and in a synchronous mode to output the decoded video data and the decoded audio data synchronously with each other if the operation detector detects that the user does not perform an operation.

6. A method of reproducing data, comprising:
decoding encoded video data and encoded audio data;
detecting a volume level of the audio data decoded at said decoding of the encoded video data and the encoded audio data; and
outputting the decoded video data and the decoded audio data asynchronously with each other if the volume level detected at said detecting of the volume level of the audio data indicates a silent state.

7. A method of reproducing data, comprising:
decoding encoded video data and encoded audio data;
detecting whether or not a user operates; and
outputting the decoded video data and the decoded audio data asynchronously with each other if it is detected that the user operates ta said detecting whether or not the user operates.
